# EUROPEAN PATENT APPLICATION

(11) **EP 4 092 538 A1**
(43) Date of publication of application: **23.11.2022**
(21) Application number: 21895911.2
(22) Date of filing: 06.07.2021
(51) Int. Cl.: G06F 11/36, G06F 16/29

(54) **METHOD AND APPARATUS FOR TESTING ELECTRONIC MAP, AND ELECTRONIC DEVICE AND STORAGE MEDIUM**

(30) Priority: 22.03.2021 CN 202110302416
(71) Applicant: BEIJING BAIDU NETCOM SCIENCE AND TECHNOLOGY CO. LTD., 100085 Beijing (CN)
(72) Inventor: GUO, Taiping, 100085 Beijing (CN); XU, Ling, 100085 Beijing (CN); SUN, Jianli, 100085 Beijing (CN)
(74) Representative: Regimbeau
(86) International application number: PCT/CN2021/104795
(87) International publication number: WO 2022/198835

(57) **Abstract**

Provided are a method and apparatus for testing an electronic map, an electronic device, and a storage medium. The method for testing an electronic map includes that N search words input by a user is acquired through the electronic map, where N is a natural number greater than or equal to 1; a correspondence between the N search words and policy scenarios is determined; a user scenario corresponding to each search word and a policy scenario corresponding to each search word are obtained based on a predetermined correspondence between the N search words and a user scenario and the correspondence between the N search words and the policy scenario; and the electronic map is tested based on a user scenario corresponding to each search word and the policy scenario corresponding to each search word.

## Description

The present disclosure claims priority to Chinese Patent Application No. 202110302416.9 filed with the China National Intellectual Property Administration (CNIPA) on Mar. 22, 2021, the disclosure of which is incorporated herein by reference in its entirety.

### TECHNICAL FIELD

The present application refers to the field of electronic map technology, for example, map search technology, for example, a method and apparatus for testing an electronic map, an electronic device, and a storage medium.

### BACKGROUND

The test of an electronic map is mainly applied to an upgrade scenario of the electronic map. Different versions of the electronic map before and after being upgraded are tested by using test data so that a test result of the electronic map is obtained. Methods for testing an electronic map mainly include three types of tests. (1) A functional test is included. In the function test, the difference (diff) of a batch of random search words (queries) at a system level, at a field level, or in a large-granularity policy is output by virtue of means including automated case regression, random difference, high-frequency difference, and technical index difference. Then the preceding difference is analyzed manually to determine whether the effect of a project change on the entire search system meets expectations. (2) A performance test is included. This method is implemented by copying online traffic and replaying the traffic offline and requires a long-time stress test using a large word list. (3) A difference test is included. This method uses a large word list to cover all scenarios and policies.

The preceding methods for testing an electronic map have the technical problems hereinafter respectively. (1) For the functional test, the policy division in fine granularity and the measurement in scenario coverage are absent, unable to guarantee test integrity; moreover, when a search policy of the electronic map changes, for example, when the policy of multiple small granularities changes, it lacks a method or is relatively blind to infer each accurate search word corresponding to each service scenario. (2) For the performance test, the coverage of the word list has not been demonstrated, and a means for continuous improvement is absent. (3) For the difference test, an abstract solution targeted for each policy scenario is absent.

### SUMMARY

The present application provides a method and apparatus for testing an electronic map, an electronic device, and a storage medium so that a test can be performed more precisely and accurately for different policy scenarios, improving test adequacy and coverage, enhancing test efficiency, and reducing test costs.

A method for testing an electronic map is provided. The method includes the following.

N search words input by a user is acquired through the electronic map. N is a natural number greater than or equal to 1.

A correspondence between the N search words and a policy scenario is determined.

A user scenario corresponding to each search word and A policy scenario corresponding to each search word are obtained based on a predetermined correspondence between the N search words and a user scenario and the correspondence between the N search words and the policy scenario.

The electronic map is tested based on the user scenario corresponding to each search word and the policy scenario corresponding to each search word.

An apparatus for testing an electronic map is further provided. The apparatus includes an input module, a determination module, an association module, and a test module.

The input module is configured to acquire, through the electronic map, N search words input by a user. N is a natural number greater than or equal to 1.

The determination module is configured to determine a correspondence between the N search words and policy scenarios.

The association module is configured to obtain a user scenario corresponding to each search word and a policy scenario corresponding to each search word based on a predetermined correspondence between the N search words and a user scenario and the correspondence between the N search words and the policy scenario.

The test module is configured to test the electronic map based on the user scenario corresponding to each search word and the policy scenario corresponding to each search word.

An electronic device is further provided. The electronic device includes at least one processor and a memory communicatively connected to the at least one processor. The memory is configured to store instructions executable by the at least one processor to cause the at least one processor to perform the preceding method for testing an electronic map.

A non-transitory computer-readable storage medium for storing computer instructions is further provided. The computer instructions are configured to cause a computer to perform the preceding method for testing an electronic map.

A computer program product is further provided. The computer program product includes a computer program which, when executed by a processor, causes the processor to perform the preceding method for testing an electronic map.

### BRIEF DESCRIPTION OF DRAWINGS

FIG. 1 is a flowchart of a method for testing an electronic map according to an embodiment of the present application.
FIG. 2 is a flowchart of another method for testing an electronic map according to an embodiment of the present application.
FIG. 3 is a flowchart of another method for testing an electronic map according to an embodiment of the present application.
FIG. 4 is a diagram illustrating the structure of an apparatus for testing an electronic map according to an embodiment of the present application.
FIG. 5 is a diagram illustrating the structure of a determination module according to an embodiment of the present disclosure.
FIG. 6 is a block diagram of an electronic device for implementing a method for testing an electronic map according to an embodiment of the present application.

### DETAILED DESCRIPTION

Example embodiments of the present application, including details of embodiments of the present application, are described hereinafter in conjunction with the drawings to facilitate understanding. The example embodiments are merely illustrative. Description of well-known functions and constructions is omitted hereinafter.

### Embodiment one

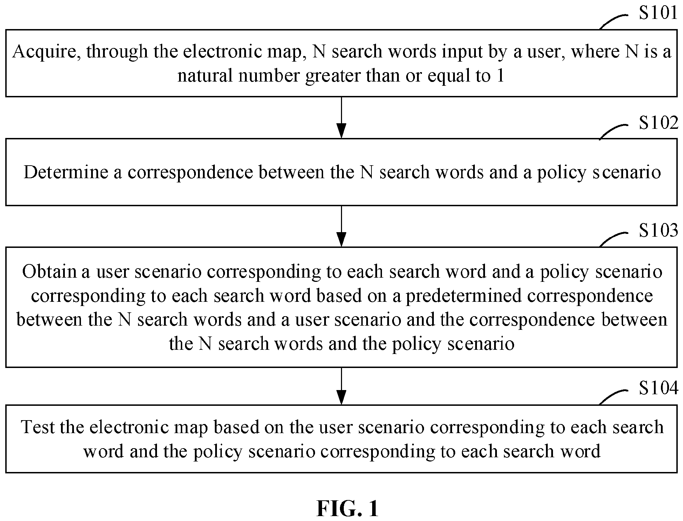

FIG. 1 is a flowchart of a method for testing an electronic map according to an embodiment of the present application. The method may be executed by an apparatus for testing an electronic map or an electronic device. The apparatus or the electronic device may be implemented by software and/or hardware. The apparatus or the electronic device may be integrated into any intelligent device having a network communication function. As shown in FIG. 1, the method for testing an electronic map may include the following.

In S101, N search words input by a user are acquired through the electronic map. N is a natural number greater than or equal to 1.

In this step, the electronic device acquires, through the electronic map, the N search words input by the user. N is a natural number greater than or equal to 1. When the user inputs a search word in a search box of the electronic map or another search entry of the electronic map, the electronic device saves the search word input by the user into a database. In this case, the electronic device acquires a plurality of search words in batches through the electronic map. The search words here may be search words associated with each other or search words not associated with each other, which is not limited here.

In S102, a correspondence between the N search words and a policy scenario is determined.

In this step, the electronic device determines the correspondence between the N search words and the policy scenario. In the case where a plurality of policy scenarios are provided, in the case where the dimensional distribution of the policy scenarios does not meet a preset convergence condition, the electronic device extracts M search words from the N search words to serve as search words of a current batch. M is a natural number greater than or equal to 1 and less than or equal to N. Then a hit result corresponding to at least one componentized policy scenario and/or a hit result corresponding to at least one non-componentized policy scenario is obtained based on the search words of the current batch. Then the electronic device determines a correspondence between the search words and a policy scenario based on the obtained hit result corresponding to at least one componentized policy scenario and/or the obtained hit result corresponding to at least one non-componentized policy scenario. The preceding operations are repeated until the dimensional distribution of the policy scenarios meets the preset convergence condition.

In S103, a user scenario corresponding to each search word and a policy scenario corresponding to each search word are obtained based on a predetermined correspondence between the N search words and a user scenario and the correspondence between the N search words and the policy scenario.

In this step, the electronic device obtains the user scenario corresponding to each search word and the policy scenario corresponding to each search word based on the predetermined correspondence between the N search words and the user scenarios and the correspondence between the N search words and the policy scenario. The electronic device extracts one search word from the N search words input by the user to serve as a current search word, then obtains the user scenario corresponding to the current search word and the policy scenario corresponding to the current search word according to the predetermined correspondence between the current search word and at least one user scenario and the correspondence between the current search word and a policy scenario, and repeats the preceding operations until obtaining the user scenario corresponding to each search word and the policy scenario corresponding to each search word. This step is equivalent to establishing a correspondence between the search words, the user scenarios, and the policy scenarios. In a specific embodiment of the present application, the electronic device pre-constructs a plurality of user scenarios and a plurality of policy scenarios. The policy scenarios are further divided into componentized policy scenarios and non-componentized policy scenarios. The number of user scenarios and the number of policy scenarios can be preset. Additionally, the number of componentized policy scenarios and the number of non-componentized policy scenarios can also be preset. For example, the number of componentized policy scenarios may be 132, and the number of non-componentized policy scenarios may be 38.

A user scenario in embodiments of the present application may include but is not limited to at least one of the following: a requirement type, an industry, a query type (QT), a source of a suggestion recommended by a large box of the map, a result form, whether to be presented mandatorily, or whether to be divided by districts. A non-componentized policy scenario may include but is not limited to at least one of the following: a search word analysis policy, a query plan of data analysis (DA), a recall queue type, or a recall type of basic search (BS). A componentized policy scenario may include but is not limited to at least one of the following: an analysis policy of semantic recall feature leveling (approximate nearest neighbor decode (AnnDecode)), a learning-to-rank (LTR) coarse-arrangement policy, an LTR post-processing policy, a rearrangement policy, a pre-filtering policy, an LTR quality control model, a city fine-arrangement policy, a priority policy, a city coarse-arrangement policy, a filtering policy after LTR coarse arrangement, a balance model policy, an LTR pre-processing policy, an LTR fine-arrangement policy, or a deprecated/temporarily-available fine-arrangement policy.

In S104, the electronic map is tested based on the user scenario corresponding to each search word and the policy scenario corresponding to each search word.

In this step, the electronic device tests the electronic map based on the user scenario corresponding to each search word and the policy scenario corresponding to each search word. Based on the user scenario corresponding to each search word and the policy scenario corresponding to each search word, the electronic device obtains an entry word list which is in a predetermined format and corresponds to a target test item. The target test item includes at least one of the following: a functional test, a special scenario difference test, or a special scenario performance test and special scenario stability test. Then the electronic device joins the entry word list, which is in the predetermined format and corresponds to the target test item, with a test line corresponding to the target test item so as to obtain a test result of the electronic map in the target test item.

In the method for testing an electronic map provided in embodiments of the present application, the N search words input by the user are acquired first through the electronic map; then the user scenario corresponding to each search word and the policy scenario corresponding to each search word are obtained based on the predetermined correspondence between the N search words and the user scenarios and the correspondence between the N search words and the policy scenario; and finally, the electronic map is tested based on the user scenario corresponding to each search word and the policy scenario corresponding to each search word. That is, the present application establishes the correspondence between each search word and the user scenario and the correspondence between each search word and the policy scenario. Then the electronic map is tested based on the correspondence between each search word and the user scenario and the correspondence between each search word and the policy scenario. When a user scenario or policy scenario changes, a search word related to the user scenario or policy scenario can be acquired rapidly. Similarly, when a search word changes, a user scenario or policy scenario related to the search word can be acquired rapidly. In this case, a more precise and accurate test can be implemented for different policy scenarios. In a method for testing an electronic map, a solution such as a functional test, a performance test, or a difference test is usually adopted. However, the preceding solution cannot get a test performed comprehensively, sufficiently, efficiently, and accurately. The present application adopts the technical means of establishing the correspondence between each search word and the user scenario and the correspondence between each search word and the policy scenario and testing the electronic map based on the user scenario corresponding to each search word and the policy scenario corresponding to each search word, overcoming the following technical problems in the related art: The policy division in fine granularity and the measurement in scenario coverage are absent in a functional test, unable to guarantee test integrity; in a performance test, the coverage of a word list has not been demonstrated and a means for continuous improvement is absent; and an abstract solution targeted for each policy scenario is absent in a difference test. The technical solutions provided in the present application enable a test to be performed more precisely and accurately for different policy scenarios, improving test sufficiency and coverage, enhancing test efficiency, and reducing test cots. Moreover, the technical solutions in embodiments of the present application are simple and convenient to implement, easy to popularize, and applicable to a wider range.

### Embodiment two

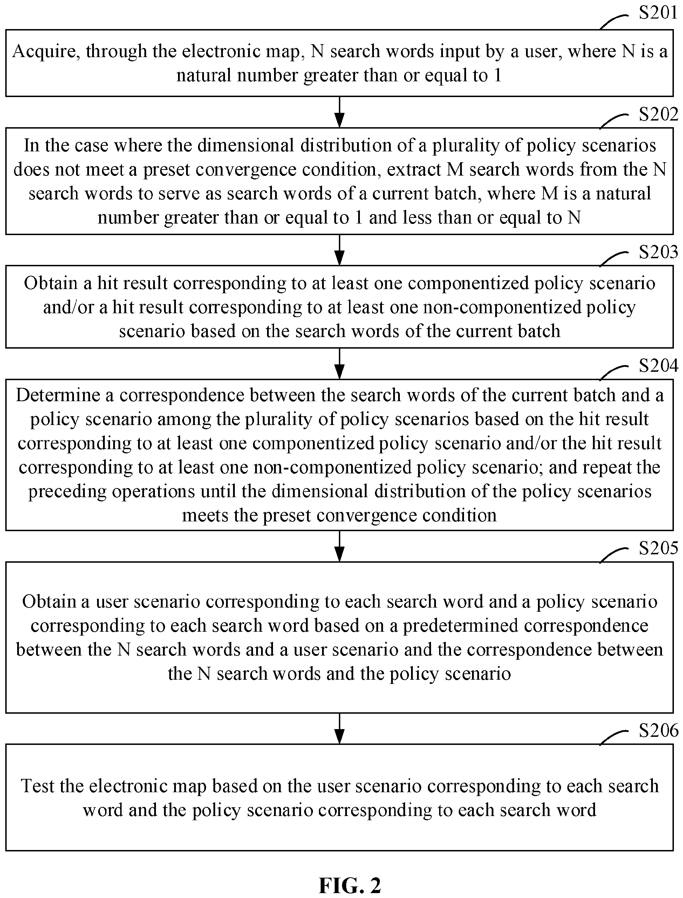

FIG. 2 is a flowchart of another method for testing an electronic map according to an embodiment of the present application. As shown in FIG. 2, the method for testing an electronic map may include the following.

In S201, N search words input by a user are acquired through the electronic map. N is a natural number greater than or equal to 1.

In S202, in the case where the dimensional distribution of a plurality of policy scenarios does not meet a preset convergence condition, M search words are extracted from the N search words to serve as search words of a current batch. M is a natural number greater than or equal to 1 and less than or equal to N.

In this step, in the case where the dimensional distribution of the policy scenarios does not meet the preset convergence condition, an electronic device extracts M search words from the N search words to serve as the search words of the current batch. M is a natural number greater than or equal to 1 and less than or equal to N. An object of this step is to find a time boundary where the dimensional distribution of the policy scenarios tends to be stable. With the increase of time or traffic, the policy coverage increases and scenario dimensions increase. At the time boundary, the policy coverage and the dimensional distribution of the corresponding scenarios tend to be stable.

In S203, a hit result corresponding to at least one componentized policy scenario and/or a hit result corresponding to at least one non-componentized policy scenario is obtained based on the search words of the current batch.

In this step, based on the search words of the current batch, the electronic device obtains the hit result corresponding to at least one componentized policy scenario and/or the hit result corresponding to at least one non-componentized policy scenario. The electronic device inputs the search words of the current batch into a search module corresponding to componentized policy scenarios and a search module corresponding to non-componentized policy scenarios; through the search module corresponding to the componentized policy scenarios, the electronic device acquires the hit result corresponding to at least one componentized policy scenario; and through the search module corresponding to the non-componentized policy scenarios, the electronic device acquires the hit result corresponding to at least one non-componentized policy scenario. A hit result includes being hit or not being hit. For example, 1 represents being hit, and 0 represents not being hit. In embodiments of the present application, the search module corresponding to the componentized policy scenarios may be an acquisition search (AS) module, and the search module corresponding to the non-componentized policy scenarios may be another module other than the preceding AS module.

In S204, a correspondence between the search words of the current batch and a policy scenario among the plurality of policy scenarios is determined based on the hit result corresponding to at least one componentized policy scenario and/or the hit result corresponding to at least one non-componentized policy scenario; and the preceding operations are repeated until the dimensional distribution of the policy scenarios meets the preset convergence condition.

In this step, based on the hit result corresponding to at least one componentized policy scenario and/or the hit result corresponding to at least one non-componentized policy scenario, the electronic device determines the correspondence between the search words of the current batch and the policy scenario among the plurality of policy scenarios and repeats the preceding operations until the dimensional distribution of the policy scenarios meets the preset convergence condition. The hit result corresponding to at least one componentized policy scenario includes being hit or not being hit. The hit result corresponding to at least one non-componentized policy scenario also includes being hit or not being hit. For example, 1 represents being hit, and 0 represents not being hit. Accordingly, the electronic device determines the correspondence between the search words of the current batch and the policy scenarios based on the preceding hit result corresponding to at least one componentized policy scenario and/or the preceding hit result corresponding to at least one non-componentized policy scenario.

In S205, a user scenario corresponding to each search word and a policy scenario corresponding to each search word are obtained based on a predetermined correspondence between the N search words and a user scenario and the correspondence between the N search words and the policy scenario.

In S206, the electronic map is tested based on the user scenario corresponding to each search word and the policy scenario corresponding to each search word.

In a specific embodiment of the present application, one user scenario may correspond to a plurality of policy scenarios, and one policy scenario may also correspond to a plurality of user scenarios. Accordingly, an A × B combination customization may be performed based on a correspondence between user scenarios and policy scenarios. A denotes the number of user scenarios. B denotes the number of policy scenarios. Then based on the capability of A × B combination customization of the user scenarios and the policy scenarios, a functional test, a special scenario difference test, a special scenario performance test, or a special scenario stability test is performed for the electronic map. Detailed descriptions are made hereinafter on the preceding tests. (1) For the functional test, according to the preceding capability of A × B combination customization of the user scenarios and the policy scenarios, an abstract system-level entry plaintext word list of specific user scenarios and policy scenarios may be customized as needed according to a project change. This method is used for deducing functional test examples. Additionally, for the customized functional test examples, it can be determined according to the hit result of the policy scenarios whether an uncovered policy exists, assisting in designing the coverage of examples on the project change and assisting in supplementing test examples of the uncovered policy. (2) For the special scenario difference test, according to the preceding capability of A × B combination customization of the user scenarios and the policy scenarios, an abstract sub-system-level entry mcpack word list of specific user scenarios and policy scenarios may be made customized as needed according to a project change. Moreover, the word list is joined with a difference test platform (diff platform) or a top 3 difference test line (top3-diff line) to execute the special scenario difference test. When the word list of the special scenario difference test is compared with a default word list, it is found that the coverage of a core test improves by 6% and the coverage of branch tests improves by 3%. (3) For the special scenario performance and stability test, according to the preceding capability of A × B combination customization of the user scenarios and the policy scenarios, an abstract sub-system-level entry mcpack word list of specific user scenarios and policy scenarios may be customized as needed according to a project change. Moreover, the word list is automatically pushed to a performance platform to execute the special scenario performance test and special scenario stability test. The session large vocabulary verified in coverage can provide an supplement of an updated day-level stress-test word list for the sandbox pre-online environment so as to stabilize the routine for 10 months, filling in a gap in no solution of continuous drainage in search performance tests. Additionally, the customized stress-test word list of the specific user scenarios and policy scenarios helps locate a performance problem caused by the project change.

In the method for testing an electronic map provided in embodiments of the present application, the N search words input by the user are acquired first through the electronic map; then the user scenario corresponding to each search word and the policy scenario corresponding to each search word are obtained based on the predetermined correspondence between the N search words and the user scenarios and the correspondence between the N search words and the policy scenario; and finally the electronic map is tested based on the user scenario corresponding to each search word and the policy scenario corresponding to each search word. That is, the present application establishes the correspondence between each search word and the user scenario and the correspondence between each search word and the policy scenario. Then the electronic map is tested based on the correspondence between each search word and the user scenario and the correspondence between each search word and the policy scenario. When a user scenario or policy scenario changes, a search word corresponding to the user scenario or policy scenario can be acquired rapidly. Similarly, when a search word changes, a user scenario or policy scenario corresponding to the search word can be acquired rapidly. In this case, a more precise and accurate test can be implemented for different policy scenarios. In a method for testing an electronic map, a solution such as a functional test, a performance test, or a difference test is usually adopted. However, the preceding solution cannot get a test performed comprehensively, sufficiently, efficiently, and accurately. The present application adopts the technical means of establishing the correspondence between each search word and the user scenario and the correspondence between each search word and the policy scenario and testing the electronic map based on the user scenario corresponding to each search word and the policy scenario corresponding to each search word, overcoming the following technical problems in the related art: The policy division in fine granularity and the measurement in scenario coverage are absent in a functional test, unable to guarantee test integrity; in a performance test, the coverage of a word list has not been demonstrated and a means for continuous improvement is absent; and an abstract solution targeted for each policy scenario is absent in a difference test. The technical solutions provided in the present application enable a test to be performed more precisely and accurately for different policy scenarios, improving test sufficiency and coverage, enhancing test efficiency, and reducing test cots. Moreover, the technical solutions in embodiments of the present application are simple and convenient to implement, easy to popularize, and applicable to a wider range.

### Embodiment three

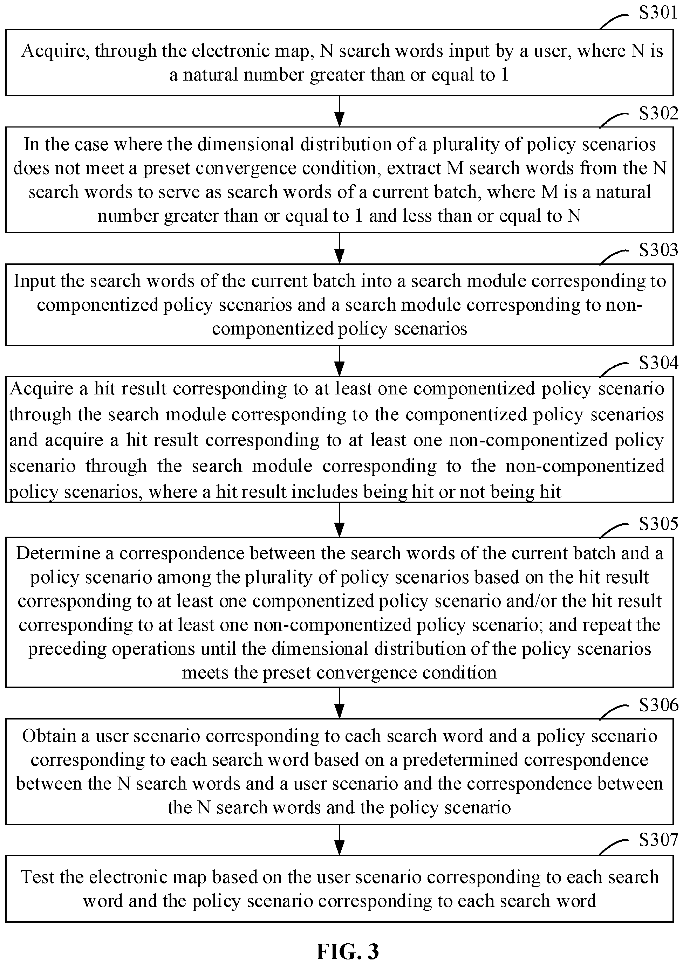

FIG. 3 is a flowchart of another method for testing an electronic map according to an embodiment of the present application. As shown in FIG. 3, the method for testing an electronic map may the following.

In S301, N search words input by a user are acquired through the electronic map. N is a natural number greater than or equal to 1.

In S302, in the case where the dimensional distribution of a plurality of policy scenarios does not meet a preset convergence condition, M search words are extracted from the N search words to serve as search words of a current batch. M is a natural number greater than or equal to 1 and less than or equal to N.

In S303, the search words of the current batch are input into a search module corresponding to componentized policy scenarios and a search module corresponding to non-componentized policy scenarios.

In this step, the electronic device inputs the search words of the current batch into the search module corresponding to the componentized policy scenarios and the search module corresponding to the non-componentized policy scenarios. The electronic device may input the search words of the current batch into an AS module corresponding to the componentized policy scenarios and input the search words of the current batch into one or more search modules other than the AS module corresponding to the componentized policy scenarios.

In S304, a hit result corresponding to at least one componentized policy scenario is acquired through the search module corresponding to the componentized policy scenarios; and a hit result corresponding to at least one non-componentized policy scenario is acquired through the search module corresponding to the non-componentized policy scenarios. A hit result includes being hit or not being hit.

In this step, through the search module corresponding to the componentized policy scenarios, the electronic device acquires the hit result corresponding to at least one componentized policy scenario; and through the search module corresponding to the non-componentized policy scenarios, the electronic device acquires the hit result corresponding to at least one non-componentized policy scenario. A hit result includes being hit or not being hit. In the process where the hit result corresponding to at least one componentized policy scenario is acquired through the search module corresponding to the componentized policy scenarios, the electronic device first acquires, on a server end, a schedule parsing result that corresponds to at least one componentized policy scenario and is output by the search module corresponding to the componentized policy scenarios. Then the electronic device extracts a field indicating that at least one componentized policy scenario is hit or is not hit from the schedule parsing result corresponding to at least one componentized policy scenario. Then the electronic device determines the hit result corresponding to at least one componentized policy scenario based on the field indicating that at least one componentized policy scenario is hit or is not hit. For example, the field indicating that at least one componentized policy scenario is hit or is not hit may be a ret field. Additionally, in the process where the hit result corresponding to at least one non-componentized policy scenario is acquired through the search module corresponding to the non-componentized policy scenarios, the electronic device first acquires, on a client end, a log returning result that corresponds to at least one non-componentized policy scenario and is output by the search module corresponding to the non-componentized policy scenarios. Then based on the log returning result corresponding to at least one non-componentized policy scenario, the electronic device determines the hit result corresponding to at least one non-componentized policy scenario.

In S305, a correspondence between the search words of the current batch and a policy scenario among the plurality of policy scenarios is determined based on the hit result corresponding to at least one componentized policy scenario and/or the hit result corresponding to at least one non-componentized policy scenario; and the preceding operations are repeated until the dimensional distribution of the policy scenarios meets the preset convergence condition.

In S306, a user scenario corresponding to each search word and a policy scenario corresponding to each search word are obtained based on a predetermined correspondence between the N search words and a user scenario and the correspondence between the N search words and the policy scenario.

In S307, the electronic map is tested based on the user scenario corresponding to each search word and the policy scenario corresponding to each search word.

In the method for testing an electronic map provided in embodiments of the present application, the N search words input by the user are acquired first through the electronic map; then the user scenario corresponding to each search word and the policy scenario corresponding to each search word are obtained based on the predetermined correspondence between the N search words and the user scenarios and the correspondence between the N search words and the policy scenario; and finally the electronic map is tested based on the user scenario corresponding to each search word and the policy scenario corresponding to each search word. That is, the present application establishes the correspondence between each search word and the user scenario and the correspondence between each search word and the policy scenario. Then the electronic map is tested based on the correspondence between each search word and the user scenario and the correspondence between each search word and the policy scenario. When a user scenario or policy scenario changes, a search word corresponding to the user scenario or policy scenario can be acquired rapidly. Similarly, when a search word changes, a user scenario or policy scenario corresponding to the search word can be acquired rapidly. In this case, a more precise and accurate test can be implemented for different policy scenarios. In a method for testing an electronic map, a solution such as a functional test, a performance test, or a difference test is usually adopted. However, the preceding solution cannot get a test performed comprehensively, sufficiently, efficiently, and accurately. The present application adopts the technical means of establishing the correspondence between each search word and the user scenario and the correspondence between each search word and the policy scenario and testing the electronic map based on the user scenario corresponding to each search word and the policy scenario corresponding to each search word, overcoming the following technical problems in the related art: The policy division in fine granularity and the measurement in scenario coverage are absent in a functional test, unable to guarantee test integrity; in a performance test, the coverage of a word list has not been demonstrated and a means for continuous improvement is absent; and an abstract solution targeted for each policy scenario is absent in a difference test. The technical solutions provided in the present application enable a test to be performed more precisely and accurately for different policy scenarios, improving test sufficiency and coverage, enhancing test efficiency, and reducing test cots. Moreover, the technical solutions in embodiments of the present application are simple and convenient to implement, easy to popularize, and applicable to a wider range.

### Embodiment four

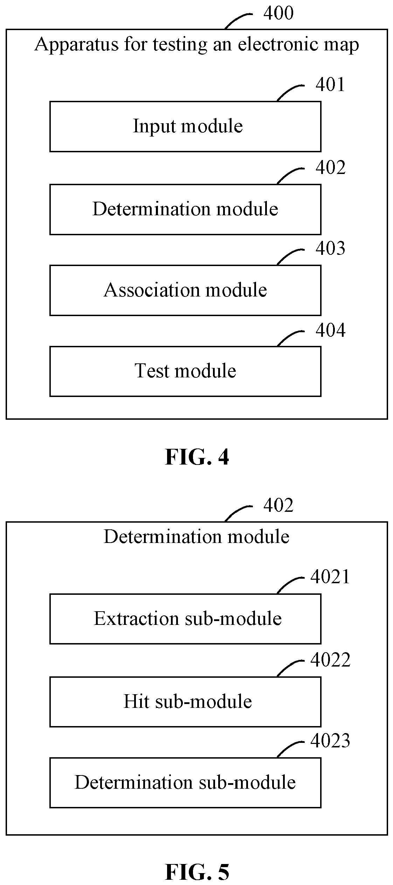

FIG. 4 is a diagram illustrating the structure of an apparatus for testing an electronic map according to an embodiment of the present application. As shown in FIG. 4, the apparatus 400 includes an input module 401, a determination module 402, an association module 403, and a test module 404. The input module 401 is configured to acquire, through the electronic map, N search words input by a user. N is a natural number greater than or equal to 1. The determination module 402 is configured to determine a correspondence between the N search words and policy scenarios. The association module 403 is configured to obtain the user scenario corresponding to each search word and the policy scenario corresponding to each search word based on a predetermined correspondence between the N search words and a user scenario and the correspondence between the N search words and the policy scenario. The test module 404 is configured to test the electronic map based on the user scenario corresponding to each search word and the policy scenario corresponding to each search word.

FIG. 5 is a diagram illustrating the structure of a device according to embodiments of the present application. As shown in FIG. 5, in the case where a plurality of policy scenarios are provided, the determination module 402 includes an extraction sub-module 4021, a hit sub-module 4022, and a determination sub-module 4023. The extraction sub-module 4021 is configured to, in the case where the dimensional distribution of the policy scenarios does not meet a preset convergence condition, extract M search words from the N search words to serve as search words of a current batch. M is a natural number greater than or equal to 1 and less than or equal to N. The hit sub-module 4022 is configured to obtain, based on the search words of the current batch, a hit result corresponding to at least one componentized policy scenario and/or a hit result corresponding to at least one non-componentized policy scenario. The determination sub-module 4023 is configured to determine, based on the hit result corresponding to at least one componentized policy scenario and/or the hit result corresponding to at least one non-componentized policy scenario, a correspondence between the search words of the current batch and a policy scenario among the plurality of policy scenarios and repeat the preceding operations until the dimensional distribution of the policy scenarios meets the preset convergence condition.

The hit sub-module 4022 is configured to input the search words of the current batch into a search module corresponding to componentized policy scenarios and a search module corresponding to non-componentized policy scenarios; acquire a hit result corresponding to at least one componentized policy scenario through the search module corresponding to the componentized policy scenarios; and acquire a hit result corresponding to at least one non-componentized policy scenario through the search module corresponding to the non-componentized policy scenarios. A hit result includes being hit or not being hit.

The hit sub-module 4022 is configured to acquire, on a server end, a schedule parsing result that corresponds to at least one componentized policy scenario and is output by the search module corresponding to the componentized policy scenarios; extract, from the schedule parsing result corresponding to at least one componentized policy scenario, a field indicating that at least one componentized policy scenario is hit or is not hit; and determine the hit result corresponding to at least one componentized policy scenario based on the field indicating that at least one componentized policy scenario is hit or is not hit.

The hit sub-module 4022 is configured to acquire, on a client end, a log returning result that corresponds to at least one non-componentized policy scenario and is output by the search module corresponding to the non-componentized policy scenarios and determine the hit result corresponding to at least one non-componentized policy scenario based on the log returning result corresponding to at least one non-componentized policy scenario.

The test module 404 is configured to obtain an entry word list which is in a predetermined format and corresponds to a target test item based on a user scenario corresponding to each search word and a policy scenario corresponding to each search word. The target test item includes at least one of the following: a functional test, a special scenario difference test, or a special scenario performance test and special scenario stability test. Moreover, the test module 404 is configured to join the entry word list, which is in the predetermined format and corresponds to the target test item, with a test line corresponding to the target test item so as to obtain a test result of the electronic map in the target test item.

The preceding apparatus for testing an electronic map can execute the method provided by any embodiment of the present application and has functional modules and beneficial effects corresponding to the execution method. Technology details not described in detail in this embodiment may be referred to the method for testing an electronic map provided in embodiments of the present application.

The acquisition, storage, and application of a user's personal information involved in the technical solutions of the present application comply with the provisions of relevant laws and regulations and do not violate public order and good customs.

### Embodiment five

According to embodiments of the present application, the present application further provides an electronic device, a readable storage medium, and a computer program product.

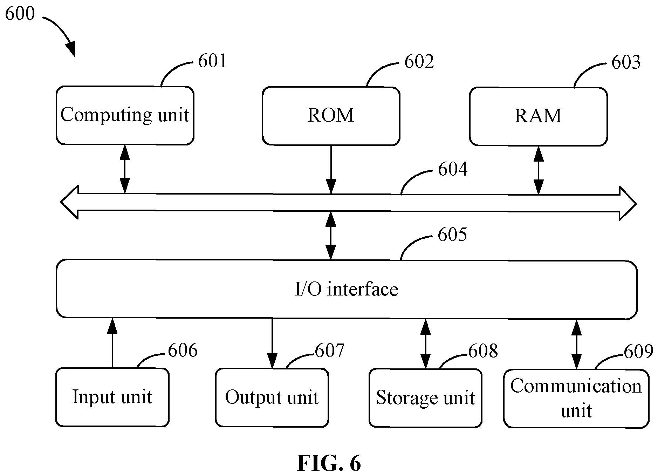

FIG. 6 is a block diagram of an electronic device for implementing a method for testing an electronic map according to an embodiment of the present application. Electronic devices 600 are intended to represent various forms of digital computers, for example, laptop computers, desktop computers, worktables, personal digital assistants, servers, blade servers, mainframe computers, and other applicable computers. Electronic devices 600 may further represent various forms of mobile devices, for example, personal digital assistants, cellphones, smartphones, wearable devices, and other similar computing apparatuses. Herein the shown components, the connections and relationships between these components, and the functions of these components are merely illustrative and are not intended to limit the implementation of the present application as described and/or claimed herein.

As shown in FIG. 6, the electronic device 600 includes a computing unit 601. The computing unit 601 may perform various appropriate actions and processing according to a computer program stored in a read-only memory (ROM) 602 or a computer program loaded into a random-access memory (RAM) 603 from a storage unit 608. The RAM 603 may also store various programs and data required for the operation of the electronic device 600. The computing unit 601, the ROM 602, and the RAM 603 are connected to each other through a bus 604. An input/output (I/O) interface 605 is also connected to the bus 604.

Multiple components in the electronic device 600 are connected to the I/O interface 605. The multiple components include an input unit 606 such as a keyboard and a mouse, an output unit 607 such as various types of displays and speakers, the storage unit 608 such as a magnetic disk and an optical disk, and a communication unit 609 such as a network card, a modem, and a wireless communication transceiver. The communication unit 609 allows the electronic device 600 to exchange information/data with other devices over a computer network such as the Internet and/or various telecommunications networks.

The computing unit 601 may be a general-purpose and/or special-purpose processing component having multiple processing and computing capabilities. Some examples of the computing unit 601 include, but are not limited to, central processing units (CPUs), graphics processing units (GPUs), various dedicated artificial intelligence (AI) computing chips, various computing units running machine learning models and algorithms, digital signal processors (DSPs) and any suitable processors, controllers and microcontrollers. The computing unit 601 performs various preceding methods and processing, for example, the method for testing an electronic map. For example, in some embodiments, the method for testing an electronic map may be implemented as a computer software program tangibly contained in a machine-readable medium such as the storage unit 608. In some embodiments, part or all of computer programs may be loaded and/or installed on the electronic device 600 via the ROM 602 and/or the communication unit 609. When the computer program is loaded to the RAM 603 and executed by the computing unit 601, one or more steps of the preceding method for testing an electronic map may be performed. Alternatively, in other embodiments, the computing unit 601 may be configured, in any other appropriate manner (for example, by means of firmware), to perform the method for testing an electronic map.

The various embodiments of the systems and techniques described herein may be implemented in digital electronic circuitry, integrated circuitry, a field-programmable gate array (FPGA), an application-specific integrated circuit (ASIC), application-specific standard parts (ASSP), a system on a chip (SoC), a complex programmable logic device (CPLD), computer hardware, firmware, software, and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting data and instructions to the memory system, the at least one input device and the at least one output device.

Program codes for the implementation of the method of the present application may be written in any combination of one or more programming languages. These program codes may be provided for the processor or controller of a general-purpose computer, a special-purpose computer, or another programmable data processing device to enable functions/operations specified in a flowchart and/or a block diagram to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present application, a machine-readable medium may be a tangible medium that may contain or store a program that is used by or in conjunction with a system, apparatus, or device that executes instructions. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device, or any suitable combination thereof.

In order that interaction with a user is provided, the systems and techniques described herein may be implemented on a computer. The computer has a display apparatus for displaying information to the user, such as a cathode-ray tube (CRT) or a liquid-crystal display (LCD) monitor, and a keyboard and a pointing apparatus such as a mouse or a trackball through which the user can provide input to the computer. Other types of devices may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in conventional physical host and virtual private server (VPS) services. The server may also be a server of a distributed system, or a server combined with a blockchain.

Various forms of the preceding flows may be used, with steps reordered, added, or removed. For example, the steps described in the present application may be executed in parallel, in sequence, or in a different order as long as the desired results of the technical solutions provided in the present application are achieved. The execution sequence of these steps is not limited herein.

## Claims

1. A method for testing an electronic map, comprising:
acquiring, through the electronic map, N search words input by a user, wherein N is a natural number greater than or equal to 1;
determining a correspondence between the N search words and a policy scenario;
obtaining a user scenario corresponding to each search word among the N search words and a policy scenario corresponding to the each search word based on a predetermined correspondence between the N search words and a user scenario and the correspondence between the N search words and the policy scenario; and
testing the electronic map based on the user scenario corresponding to the each search word and the policy scenario corresponding to the each search word.

2. The method according to claim 1, in a case where a plurality of policy scenarios are provided, determining the correspondence between the N search words and the policy scenario comprises:
in a case where a dimensional distribution of the plurality of policy scenarios does not meet a preset convergence condition, extracting M search words from the N search words to serve as search words of a current batch, wherein M is a natural number greater than or equal to 1 and less than or equal to N;
obtaining, based on the search words of the current batch, at least one of the following: a hit result corresponding to at least one componentized policy scenario or a hit result corresponding to at least one non-componentized policy scenario; and
determining, based on the obtained hit result, a correspondence between the search words of the current batch and a policy scenario among the plurality of policy scenarios; and repeating preceding operations until the dimensional distribution of the plurality of policy scenarios meets the preset convergence condition.

3. The method according to claim 2, wherein obtaining, based on the search words of the current batch, at least one of the following: the hit result corresponding to the at least one componentized policy scenario or the hit result corresponding to the at least one non-componentized policy scenario comprises:
inputting the search words of the current batch into a search module corresponding to componentized policy scenarios and a search module corresponding to non-componentized policy scenarios; and
acquiring the hit result corresponding to the at least one componentized policy scenario through the search module corresponding to the componentized policy scenarios; and acquiring the hit result corresponding to the at least one non-componentized policy scenario through the search module corresponding to the non-componentized policy scenarios; wherein a hit result comprises being hit or not being hit.

4. The method according to claim 3, wherein acquiring the hit result corresponding to the at least one componentized policy scenario through the search module corresponding to the componentized policy scenarios comprises:
acquiring, on a server end, a schedule parsing result that corresponds to the at least one componentized policy scenario and is output by the search module corresponding to the componentized policy scenarios;
extracting, from the schedule parsing result corresponding to the at least one componentized policy scenario, a field indicating that the at least one componentized policy scenario is hit or is not hit; and
determining the hit result corresponding to the at least one componentized policy scenario based on the field indicating that the at least one componentized policy scenario is hit or is not hit.

5. The method according to claim 3, wherein acquiring the hit result corresponding to the at least one non-componentized policy scenario through the search module corresponding to the non-componentized policy scenarios comprises:
acquiring, on a client end, a log returning result that corresponds to the at least one non-componentized policy scenario and is output by the search module corresponding to the non-componentized policy scenarios; and
determining the hit result corresponding to the at least one non-componentized policy scenario based on the log returning result corresponding to the at least one non-componentized policy scenario.

6. The method according to claim 1, wherein testing the electronic map based on the user scenario corresponding to the each search word and the policy scenario corresponding to the each search word comprises:
obtaining an entry word list which is in a predetermined format and corresponds to a target test item based on the user scenario corresponding to the each search word and the policy scenario corresponding to the each search word, wherein the target test item comprises at least one of the following: a functional test, a special scenario difference test, or a special scenario performance test and special scenario stability test; and
joining the entry word list, which is in the predetermined format and corresponds to the target test item, with a test line corresponding to the target test item so as to obtain a test result of the electronic map in the target test item.

7. An apparatus for testing an electronic map, comprising an input module, a determination module, an association module, and a test module, wherein
the input module is configured to acquire, through the electronic map, N search words input by a user, wherein N is a natural number greater than or equal to 1;
the determination module is configured to determine a correspondence between the N search words and policy scenarios;
the association module is configured to obtain a user scenario corresponding to each search word among the N search words and a policy scenario corresponding to the each search word based on a predetermined correspondence between the N search words and a user scenario and the correspondence between the N search words and the policy scenario; and
the test module is configured to test the electronic map based on the user scenario corresponding to the each search word and the policy scenario corresponding to the each search word.

8. The apparatus according to claim 7, wherein in a case where a plurality of policy scenarios are provided, the determination module comprises an extraction sub-module, a hit sub-module, and a determination sub-module, wherein
the extraction sub-module is configured to, in a case where a dimensional distribution of the plurality of policy scenarios does not meet a preset convergence condition, extract M search words from the N search words to serve as search words of a current batch, wherein M is a natural number greater than or equal to 1 and less than or equal to N;
the hit sub-module is configured to obtain, based on the search words of the current batch, at least one of the following: a hit result corresponding to at least one componentized policy scenario or a hit result corresponding to at least one non-componentized policy scenario; and
the determination sub-module is configured to determine, based on an obtained hit result, a correspondence between the search words of the current batch and a policy scenario among the plurality of policy scenarios and repeat preceding operations until the dimensional distribution of the plurality of policy scenarios meets the preset convergence condition.

9. The apparatus according to claim 8, wherein the hit sub-module is configured to:
input the search words of the current batch into a search module corresponding to componentized policy scenarios and a search module corresponding to non-componentized policy scenarios; and
acquire the hit result corresponding to the at least one componentized policy scenario through the search module corresponding to the componentized policy scenarios; and acquire the hit result corresponding to the at least one non-componentized policy scenario through the search module corresponding to the non-componentized policy scenarios; wherein a hit result comprises being hit or not being hit.

10. The apparatus according to claim 9, wherein the hit sub-module is configured to acquire the hit result corresponding to the at least one componentized policy scenario through the search module corresponding to the componentized policy scenarios in the following manners:
acquiring, on a server end, a schedule parsing result that corresponds to the at least one componentized policy scenario and is output by the search module corresponding to the componentized policy scenarios;
extracting, from the schedule parsing result corresponding to the at least one componentized policy scenario, a field indicating that the at least one componentized policy scenario is hit or is not hit; and
determining the hit result corresponding to the at least one componentized policy scenario based on the field indicating that the at least one componentized policy scenario is hit or is not hit.

11. The apparatus according to claim 9, wherein the hit sub-module is configured to acquire the hit result corresponding to the at least one non-componentized policy scenario through the search module corresponding to the non-componentized policy scenarios in the following manners:
acquiring, on a client end, a log returning result that corresponds to the at least one non-componentized policy scenario and is output by the search module corresponding to the non-componentized policy scenarios; and
determining the hit result corresponding to the at least one non-componentized policy scenario based on the log returning result corresponding to the at least one non-componentized policy scenario.

12. The apparatus according to claim 7, wherein the test module is configured to:
obtain an entry word list which is in a predetermined format and corresponds to a target test item based on the user scenario corresponding to the each search word and the policy scenario corresponding to the each search word, wherein the target test item comprises at least one of the following: a functional test, a special scenario difference test, or a special scenario performance test and special scenario stability test; and
join the entry word list, which is in the predetermined format and corresponds to the target test item, with a test line corresponding to the target test item so as to obtain a test result of the electronic map in the target test item.

13. An electronic device, comprising:
at least one processor; and
a memory communicatively connected to the at least one processor, wherein
the memory is configured to store instructions executable by the at least one processor to cause the at least one processor to perform the method for testing an electronic map according to any one of claims 1 to 6.

14. A non-transitory computer-readable storage medium, the storage medium storing computer instructions, wherein the computer instructions are configured to cause a computer to perform the method for testing an electronic map according to any one of claims 1 to 6.

15. A computer program product, comprising a computer program which, when executed by a processor, causes the processor to perform the method for testing an electronic map according to any one of claims 1 to 6.
